# EUROPEAN PATENT APPLICATION

(11) **EP 1 270 172 A1**
(43) Date of publication of application: **02.01.2003**
(21) Application number: 02254404.3
(22) Date of filing: 24.06.2002
(51) Int. Cl.: B29C 45/76

(54) **Method of and device for collecting knowledge of molding technique**

(30) Priority: 25.06.2001 JP 2001191577
(71) Applicant: FANUC LTD, Minamitsuru-gun, Yamanashi 401-0597 (JP)
(72) Inventor: Kamiguchi, Masao, Minamitsuru-gun, Yamanashi 401-0301 (JP)
(74) Representative: Billington, Lawrence Emlyn

(57) **Abstract**

There is provided a method of and a device for collecting knowledge of an injection molding technique capable of collecting knowledge of an injection molding technique from a number of expert engineers without a knowledge engineer, and also collecting machine operation data obtained in performing an injection molding operation in accordance with the knowledge of the injection molding technique. A plurality of injection molding machines (2-N) are connected to a server computer (1) through a network (LAN). A predetermined rule for collecting an expert engineer's knowledge of the injection molding technique is stored to be executable in the server computer (1). Each of the injection molding machines (2-N) is provided with an input device (3-N) for allowing an operator (E-N) to input data utilizing the predetermined rule. When a problem such as a molding defect occurs in an injection molding machine (2-N), an expert engineer (E-N) takes a countermeasure against the molding defect, such as modification of set values of molding conditions. The items of the modified conditions, the set values of the molding conditions before and after the modification by the expert engineer, and machine operation data before and after the modification of the molding conditions, are sent to the server computer (1) to be stored. Thus the knowledge of the appropriate countermeasure which the expert engineers have, and the actual machine operation data before and after taking the countermeasure, are stored in the server computer (1) so that qualitative and quantitative data are utilized for finding an appropriate countermeasure against the molding defect.

## Description

The present invention relates to an injection molding technique, and in particular to a method of and a device for collecting knowledge of the molding technique for obtaining non-defective molded products using an injection molding machine.

An injection molding operation is performed by injecting molten resin in a heating cylinder into a cavity of a mold and ejecting a molded product from the mold. For obtaining non-defective products by the injection molding, it is necessary to set a variety of appropriate molding conditions for an injection molding machine.

The molding conditions may comprise a mold clamping condition upon which the mold is opened/closed and clamped, a metering condition for melting and metering the resin, an injection condition for injecting the molten resin into the molds, etc. The clamping condition may comprise a mold closing speed, a mold opening speed, a mold clamping speed, a position to switch from the mold closing speed to the mold clamping speed, and a clamping force. The metering condition may comprise a screw rotational speed, a back pressure, a rotational speed in applying the back pressure, a position to change the back pressure, a position to terminate the metering process, etc. The injection condition may comprise an injection speed, a position to change the injection speed, an injection pressure, a position to change the injection pressure, a position or a time period at which an injection speed control is switched to a pressure holding control, a pressure holding time period, a cooling time period, etc.

The molding conditions may further comprise temperature conditions at respective heating areas of a heating cylinder, a nozzle and a mold.

A number of molding conditions as listed above may have to be appropriately set for the injection molding machine. Furthermore, when the mold or the resin in use, or ambiance in performing the injection molding, is changed, the molding conditions may have to be changed in accordance therewith. Thus, it is very difficult to set appropriate molding conditions for obtaining non-defective products.

If the molding conditions are not suitable for the mold and the resin in use, a molding defect such as a short shot, a burr, a sink mark, a silver streak, a weld line, a burn mark, a bubble, a black streak, a warpage, a twist, a fog, and/or a low precision of dimensions, may be caused. The molding conditions may have to be changed and adjusted so as to eliminate the molding defect. However, a molding defect is not always eliminated by changing one particular molding condition, but rather a degree of the molding defect may increase, or another molding defect may be caused, by changing the particular molding condition.

For example, a "burr" molding defect is possibly caused by a lack of clamping force or an excessive injection pressure or an excessive holding pressure. Alternatively, the cause of the "burr" may be an excessive injection speed or an excessive resin temperature. Further, the burr may be caused by an inappropriate structure of the molds, e.g., a lack of rigidity of the molds, excessively small gate runners, an insufficient number of gates, and/or an inappropriate position of the gates.

Thus, one particular molding defect is possibly caused by various factors such as molding conditions, the structure of the mold, etc. and may be further affected by the type of the resin in use. As described, the various molding conditions may cause the molding defect in combination, and it may be difficult to obtain non-defective products by changing one particular molding condition. Indeed, the degree of the molding defect may increase, or another molding defect may be caused, by changing the particular molding condition. Therefore, an expert engineer having sufficient knowledge in injection molding techniques is necessary to cope with the molding defect.

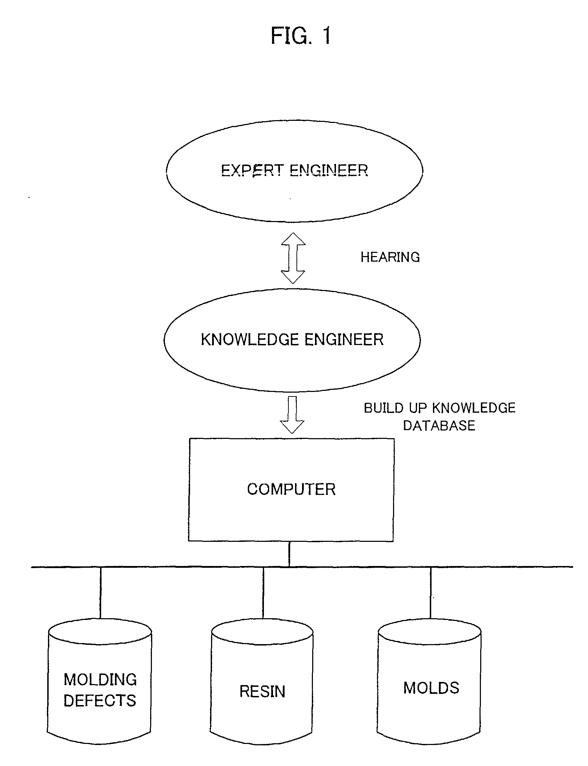

In view of the above, an attempt has been made to build-up an expert system so as to take countermeasures against the various molding defects without the presence of an expert engineer. For this purpose, it is necessary to collect know-how (knowledge) of the countermeasures which expert engineers have. An investigation or interview has been held by a knowledge engineer who is familiar with a computer system and an expert system, to collect the know-how (knowledge) which the expert engineers have, and the collected knowledge is inputted to the computer system to construct a database of the expert engineer's knowledge, as shown in FIG. 1.

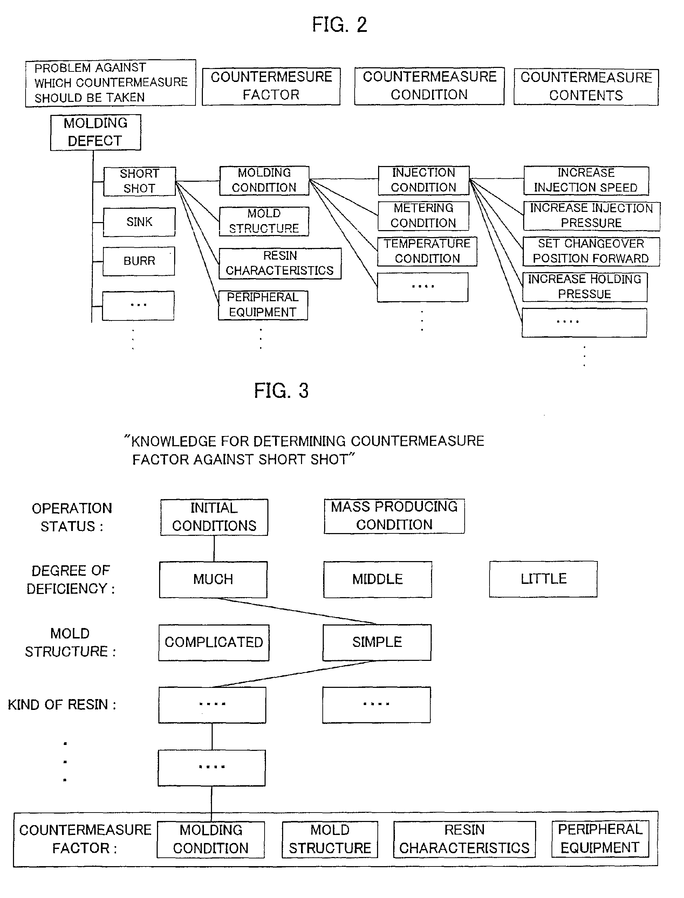

For the interview, a hearing table (questionnaire) listing question items and an order thereof is prepared so as to encompass the knowledge to be collected, as shown in FIG. 2. The questionnaire includes items of various molding defects against which countermeasures have to be taken, items of countermeasure factors for each of the molding defects, items of countermeasure conditions for each of the countermeasure factors, and items of countermeasure contents for each of the countermeasure conditions in the form of strata or layers. The knowledge engineer carries out the interview on countermeasures in accordance with the questionnaire.

For example, in the case of taking a countermeasure against a molding defect of "short shot"; "molding condition", "mold structure", "resin characteristics", "peripheral equipments",... are listed as items of countermeasure factors for the "short shot", and "injection condition". "metering condition", "temperature condition", ... are listed as countermeasure conditions concerning the countermeasure factor of "molding condition".

Further, "increase an injection speed", "increase an injection pressure", "set forward a changeover position from the injection speed control to the pressure holding control", "increase a holding pressure"... are listed as contents of countermeasures for the "injection condition", and the interview of the expert engineer is carried out referring to these items.

FIG. 3 shows an example of a result of the interview with respect to the molding defect of "short shot". This example shows that the expert engineer determined whether the short shot occurred in initial conditions or in mass-production conditions, and then determined whether the short shot was graded as much, middle or little, and further determined whether the structure of the molds was simple or complicated, and considered the type of the resin in use and ultimately selected the countermeasure factor of "molding condition", and the knowledge of selecting the countermeasure against the "short shot" through the above process is collected by the interview.

As described, the knowledge engineer performs an interview on the molding technique on the basis of the questionnaire from the expert engineer, to collect the knowledge (know-how) which the expert engineer has. However, since this method of collecting the knowledge on the molding technique is performed on a man-to-man basis between the knowledge engineer and the expert engineer, it is difficult to effectively collect the knowledge. The method of collecting the knowledge from a plurality of expert engineers using questionnaires has been developed, but it is difficult to collect a concrete method of solving problems of the molding defects, since only formalized knowledge depending on the questionnaires is collected by this method.

Further, the knowledge collected by this method lacks data of actual operations of the injection molding machine, only to collect qualitative knowledge. Thus, a quantitative analysis for using the collected knowledge in a practical sense can not be performed, to make it still necessary to carry out an interview directly with the expert engineer.

According to one aspect of the present invention there is provided a device for collecting knowledge of an injection molding technique, comprising an information processing unit and an injection molding machine connected with the information processing unit. The information processing unit has storage means for storing a predetermined rule for collecting knowledge of the injection molding technique which an operator of an injection molding machine has, execution means for executing the predetermined rule, and receiving means for receiving data to be stored in the storage means. The injection molding machine has a man-machine interface for allowing an operator to utilize the predetermined rule, and transmitting means for transmitting set data for the injection molding machine inputted by the operator and operation data of the injection molding machine obtained in performing an injection molding operation on the basis of the set data to the information processing unit.

The information processing unit may be connected with a plurality of injection molding machines through a network, for collecting knowledge of the injection molding technique with respect to the plurality of injection molding machines.

According to another aspect of the present invention there is provided a method of collecting knowledge of an injection molding technique. The method comprises the steps of: storing a predetermined rule for collecting knowledge of the injection molding technique which an operator of an injection molding machine has in an information processing unit; executing the predetermined rule for allowing the operator to utilize the predetermined rule through a man-machine interface provided in an injection molding machine; transmitting set data inputted by the operator into the injection molding machine through the man-machine interface, and operation data of the injection molding machine obtained in performing an injection molding operation on the basis of the set data to the information processing unit; and storing the set data and the operation data transmitted from the injection molding machine in the information processing unit.

### BRIEF DESCRIPTION OF THE DRAWINGS

FIG. 1 is a schematic diagram showing a conventional method of building up an expert system as a data base containing expert engineer's knowledge on a molding technique;
FIG. 2 is a schematic diagram of a questionnaire for use in collecting the expert engineer's knowledge according to the conventional method as shown in FIG. 1;
FIG. 3 is a schematic diagram showing a procedure of an interview according to the conventional method;
FIG. 4 is a block diagram of a device for collecting knowledge of an injection molding technique according to an embodiment of the present invention;
FIG. 5 is an example of an algorithm of an interview procedure according to the present invention;
FIG. 6 is an algorithm of continued processing of the interview procedure;
FIG. 7 is an algorithm of countermeasures on molds in the continued processing;
FIG. 8 is an example of a table of items against which countermeasures should be taken;
FIG. 9 is an example of a table of items of countermeasure conditions for a "short shot" molding defect;
FIG. 10 is an example of a machine operation data table; and
FIG. 11 is an example of a collected data table.

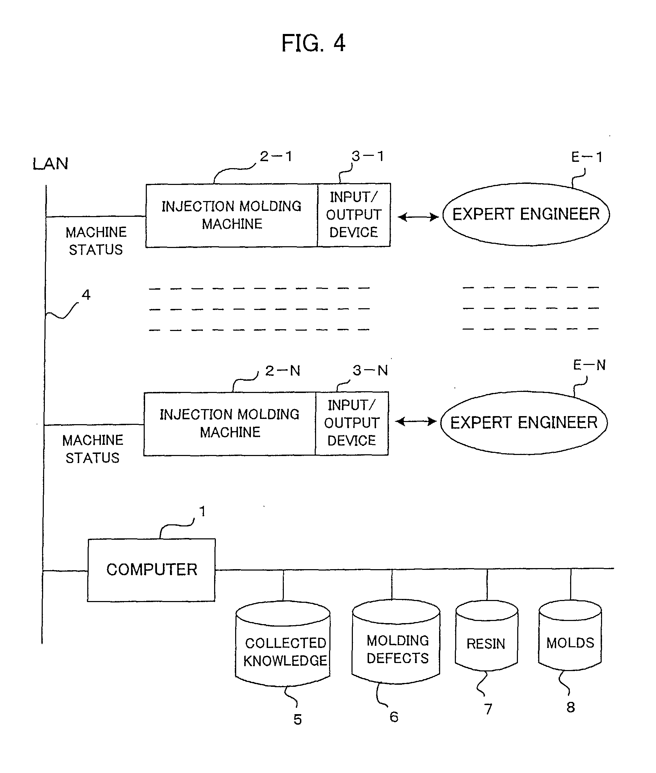

FIG. 4 shows a basic arrangement of a device for collecting knowledge of a molding technique, according to an embodiment of the present invention. Injection molding machines 2-1 to 2-N on which knowledge of the injection molding is collected are connected to a computer 1 as an information processing device having a server function through a communication line 4 of a network such as LAN (local area network). The server computer 1 is provided with a rule for collecting knowledge of the molding technique which expert engineers have, as an interview algorithm prepared by a knowledge engineer. Respective injection molding machines 2-1 to 2-N have input/output devices 3-1 to 3-N to function as clients of the server computer 1.

The server computer 1 executes the interview algorithm, and expert engineers E-1 to E-N input data and knowledge through the input/output devices 3-1 to 3-N according to the interview algorithm, to collect the knowledge in the server computer 1. Thus, the input/output devices 3-1 to 3-N constitute means for executing man-machine interfaces according to the interview algorithm. The server computer 1 stores the collected knowledge and data in a storage device 5. The server computer 1 is connected with storage devices 6, 7 and 8 for storing molding defects data, resin data, molds data, etc.

The knowledge which a plurality of expert engineers E-1 to E-N have can be simultaneously collected effectively, based on the interview algorithm, since the plurality of injection molding machines are connected to the server computer 1 through the LAN 4.

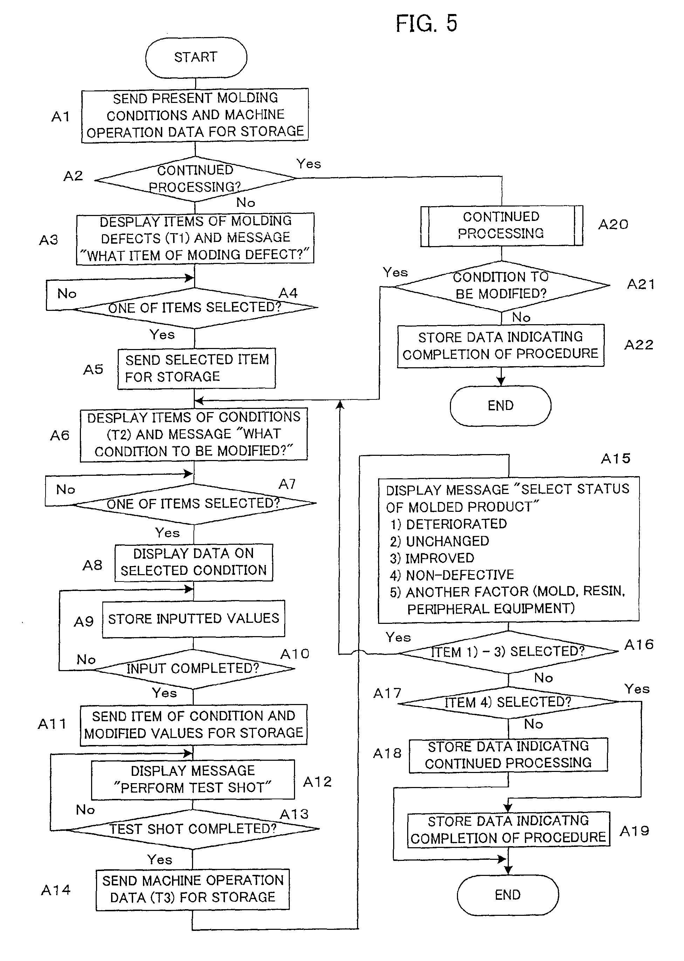

FIG. 5 shows an example of the interview algorithm for collecting knowledge from expert engineers. When a problem occurs against which a countermeasure has to be taken, such as a molding defect, the interview algorithm is executed.

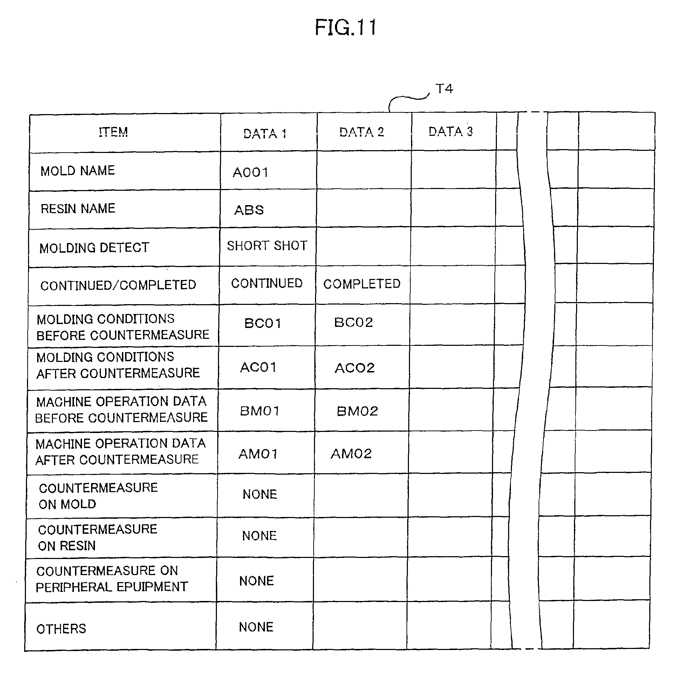

First, the molding conditions presently set to an injection molding machine, and data of a machine operation under the present molding conditions when the molding defect occurred, are sent to the server computer 1 (Step A1) and stored with associated file names in a data table T4, as shown in FIG. 11.

The molding conditions comprise a name of a mold, a name of resin in use, an injection condition, a metering condition, a clamping condition, etc. and these data are stored as molding conditions before countermeasure, with an associated file name BCO.

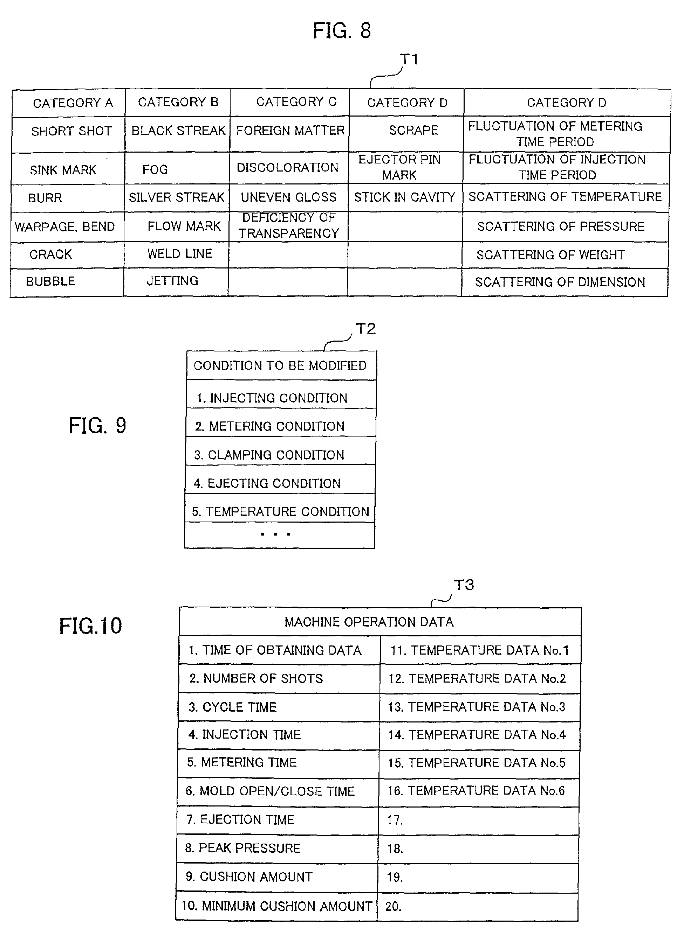

The machine operation data including time of obtaining the data, the number of shots, a cycle time period, an injection time period, a metering time period, mold opening and closing time periods, an ejection time period, a peak pressure, a cushion amount, the minimum cushion amount, temperature data No. 1 - No. 6, ... are stored in a machine operation data table T3 in the injection molding machine, as shown in FIG. 10. The machine operation data are sent to the server computer 1 through the network 4 and stored in the collected data table T4 as machine operation data before countermeasure, with an associated file name BMO, as shown in FIG. 11.

Then, it is determined whether finding of a countermeasure for the molding defect is carried out for the first time, or finding of the countermeasure is carried out for the second or more times as a continued processing, to find an appropriate countermeasure on a mold, resin, peripheral equipments, etc. other than the molding conditions after failing in eliminating the molding defect by adjusting the molding conditions (Step A2). In this embodiment, a countermeasure factor of "molding conditions" is always selected for the first determination of a countermeasure and therefore for the first time of determination, the countermeasure factor of "molding conditions" is automatically selected in Step A2.

A table T1 listing items of categorized molding detects against one of which a countermeasure has to be taken is stored in advance, as shown in FIG. 8. The stored table T1 is displayed to prompt an operator, i.e. an expert engineer, to select one of the items in the table (Step A3). It is determined whether or not one of the items is selected by the operator (Step A4) and if one of the items is selected, the selected item is sent to the server computer 1 to be stored in the collection data table T4 (Step A5). In this example, "short shot" is selected as an item of molding defect against which a countermeasure has to be taken.

Then, a table T2 storing items of countermeasure conditions ("molding conditions" in this example) to be modified for the selected item of the molding defect ("short shot" in this example) is displayed to prompt the operator to select one of the molding conditions (Step A6). An example of the table T2 is shown in FIG. 9 where items of the molding conditions for the selected molding defect of "short shot" are displayed. In this example, "1. injecting condition", "2. metering condition", "3. clamping condition", "4. ejecting condition", "5. temperature condition", ... are displayed as the conditions to be modified.

When one of the conditions is selected by the operator, i.e., expert engineer (Step A7), the present set values of the selected condition are displayed on the display device (Step A8). The expert engineer modifies the set value of the selected condition and inputs an input completion command. The set value modified by the expert engineer is stored (Step A9) and when the manual input operation is completed (Step A10), the item of the modified molding condition and the modified value thereof are sent to the server computer 1 (Step A11). The server computer 1 stores the received data in the collected data table T4 as the modified condition data with a file name BCO. The set values of the whole molding conditions including the modified set value of the selected molding condition may be stored as the modified molding condition data, or only the item of the modified molding condition and the modified value thereof may be stored.

A message to prompt the operator (expert engineer) to perform a test shot is displayed (Step A12) and when the test shot is completed the controller of the injection molding machine sends the machine operation data in the machine operation data table T3 stored in performing the test shot to the server computer 1, and the server computer 1 stores the received data as machine operation data after modification with an associated fine name AMO in the collected data table T4 (Step A14).

Then, the expert engineer observes and evaluates the molded product to determine whether the molded product is 1) deteriorated, 2) unchanged, 3) improved, 4) non-defective, or 5) to be subjected to modification of another molding factor (Step A15). The expert engineer selects one of the above items. If one of the items 1) - 3) is selected, the procedure proceeds from Step A15 to Step A6 where another molding condition is selected to be modified by the expert engineer. Then, the processings of the subsequent Steps A7-A14 are executed to obtain the modified molding condition data (ACO) of the set value of the newly selected molding condition, the machine operation data after modification of the molding condition (AMO) and the obtained data are stored in the collected data table T4. In the same manner, if one of the items 1) - 3) is selected, the processing of Step A6-A14 is repeatedly executed so that the molding condition data after countermeasure, and the machine condition data after countermeasure, are stored with associated file names in the collected data table T4.

On the other hand, if the expert engineer determines that the molding defect can not be eliminated by modification only of the molding conditions and selects the item 5) of modification of another molding factor, a signal indicating continued processing of finding countermeasure is sent to the server computer 1 to store data indicating "continued processing" at an item "continued/completed" (Steps A17, A18). If the expert engineer determines that the molded product is non-defective and selects the item 4), a completion signal is sent to the server computer 1 to store data indicating "procedure completed" at the item "continued/completed" (Step A19).

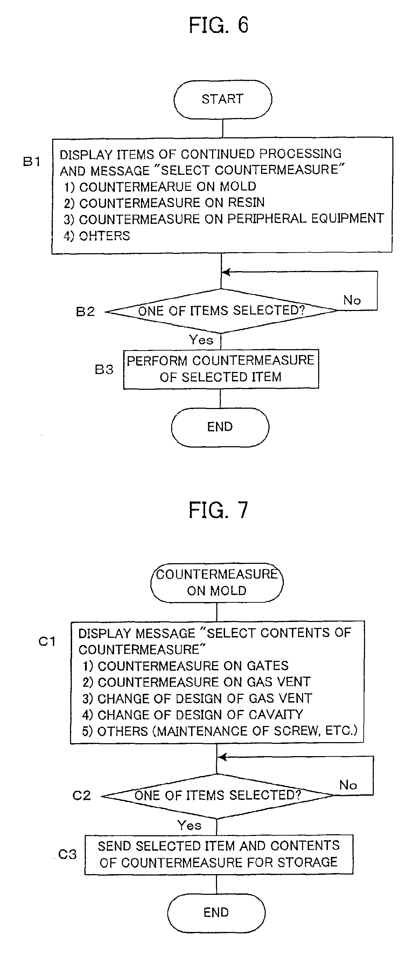

In the case of performing the continued processing, the procedure proceeds from Step A2 to Step A20 to perform the continued processing as shown in FIG. 6. In the continued processing, items of 1) countermeasure on mold, 2) countermeasure on resin, 3) countermeasure on peripheral equipments, are displayed on the display device to prompt the expert engineer to select one of the items (Step B1). After one of the items is selected (Step B2) and a countermeasure of the selected item is carried out (Step B3), the selected item and contents of the countermeasure are sent to the server computer 1 and stored in the collected data table T4.

FIG. 7 shows an example of the countermeasure on the mold. Items of 1) countermeasure on gates, 2) performing maintenance of gas vent, 3) changing of design of gas vent, 4) changing of design of cavity, 5) other countermeasures, are displayed to prompt the expert engineer to select one of the items (Step C1). After one of the items is selected (Step C2) and a countermeasure of the selected item is carried out, the selected item and contents of the countermeasure are sent to the server computer 1 and stored in the collected data table T4 (Step C3).

As described, a manual operation by an operator who is an expert engineer, on the basis of the expert engineer's knowledge for taking countermeasures against a problem such as a molding defect, is automatically collected and stored in the server computer at the occurrence of the problem, so that the knowledge which expert engineers have is effectively collected. Further, the set values of the molding conditions and the actual machine operation data before and after the modification for the countermeasure on each molding defect are stored, and thus appropriate countermeasures against respective problems can be taken referring to the stored qualitative and quantitative data. Thus, an expert system of high efficiency is built up.

There has been described and illustrated a method of and a device for collecting knowledge of an injection molding technique capable of collecting knowledge of an injection molding technique from a number of expert engineers without a knowledge engineer, and also collecting machine operation data obtained in performing an injection molding operation in accordance with the knowledge of the injection molding technique. A plurality of injection molding machines may be connected to a server computer through a network such as LAN. A predetermined rule for collecting an expert engineer's knowledge of the injection molding technique is stored to be executable in the server computer. Each of the injection molding machines is provided with an input device for allowing an operator to input data utilizing the predetermined rule.

When a problem such as a molding defect occurs in an injection molding machine, an expert engineer takes a countermeasure against the molding defect, such as modification of set values of molding conditions. The items of the modified conditions, the set values of the molding conditions before and after the modification by the expert engineer, and machine operation data before and after the modification of the molding conditions, are sent to the server computer to be stored. Thus, the knowledge of the appropriate countermeasure which the expert engineers have, and the actual machine operation data before and after taking the countermeasure, are stored in the server computer so that qualitative and quantitative data are utilized for finding an appropriate countermeasure against the molding defect.

## Claims

1. A device for collecting knowledge of an injection molding technique, comprising:
an information processing unit having storage means for storing a predetermined rule for collecting knowledge of the injection molding technique which an operator of an injection molding machine has, execution means for executing said predetermined rule, and receiving means for receiving data to be stored in the storage means; and
an injection molding machine connected with said information processing unit and having a man-machine interface for allowing an operator to utilize said predetermined rule, and transmitting means for transmitting set data for the injection molding machine inputted by the operator, and operation data of the injection molding machine obtained in performing an injection molding operation on the basis of the set data, to said information processing unit.

2. A device for collecting knowledge of an injection molding technique according to claim 1, wherein said information processing unit is connected with a plurality of injection molding machines through a network.

3. A method of collecting knowledge of an injection molding technique, comprising the steps of:
storing a predetermined rule for collecting knowledge of the injection molding technique which an operator of an injection molding machine has, in an information processing unit;
executing said predetermined rule for allowing the operator to utilize the predetermined rule through a man-machine interface provided in an injection molding machine;
transmitting set data inputted by the operator into the injection molding machine through the man-machine interface, and operation data of the injection molding machine obtained in performing an injection molding operation on the basis of the set data, to said information processing unit; and
storing the set data and the operation data transmitted from the injection molding machine in said information processing unit.
